# EUROPÄISCHE PATENTSCHRIFT

(11) **EP 2 939 965 B1**
(45) Veröffentlichungstag und Bekanntmachung des Hinweises auf die Patenterteilung: **28.06.2017**
(21) Anmeldenummer: 15156472.1
(22) Anmeldetag: 25.02.2015
(51) Int. Cl.: B65G 57/24

(54) **SCHIEBEVORRICHTUNG FÜR EINE PALETTIERVORRICHTUNG MIT EINEM SCHIEBER, WIDERLAGER UND MIT ZWEI AUSRICHTDRÜCKER**
SLIDING DEVICE FOR A PALLETISING DEVICE WITH A PUSHER, A COUNTER GUIDER AND TWO SIDE GUIDES
DISPOSITIF DE POUSSÉE POUR UN DISPOSITIF DE PALETTISATION AVEC UN POUSSOIR, UN GUIDE D'ARRÊT EN BUTÉE ET DEUX GUIDES LATÉRAUX

(30) Priorität: 28.04.2014 DE 102014105929
(43) Veröffentlichungstag der Anmeldung: 04.11.2015
(73) Patentinhaber: Windmöller & Hölscher KG, 49525 Lengerich (DE)
(72) Erfinder: Rychlik, Markus, 59073 Hamm (DE)

(56) Entgegenhaltungen:
- EP-A1- 2 832 667
- EP-A2- 0 219 780
- EP-A2- 2 411 308
- DE-A1- 3 210 189

## Beschreibung

Die vorliegende Erfindung betrifft eine Schiebevorrichtung für eine Palettiervorrichtung zum Stapeln von gefüllten Säcken zu einem Sackstapel sowie ein entsprechendes Verfahren für eine Ausrichtung einer Lage gefüllter Säcke in einer derartigen Palettiervorrichtung.

Es ist bekannt, dass Palettiervorrichtungen eingesetzt werden, um gefüllte Säcke zu einem Sackstapel aufzustapeln. Üblicherweise erfolgt dies unter Ausbildung definierter Lagebilder, also einzelner Lagen aus einzelnen gefüllten Säcken. Die gefüllten Säcke können dabei zum Beispiel eine Reihenanordnung aufweisen, um jeweils eine entsprechende Lage auszubilden. Die jeweils ausgebildete Lage wird auf eine vorhergehende Lage aufgeschichtet, so dass sich Schicht für Schicht der Sackstapel ausbildet. Um sicherzustellen, dass mit ausreichender Genauigkeit die Lagebilder in vordefinierter Weise eingehalten werden, ist ein Ausrichten der ausgebildeten Lage notwendig bzw. vorteilhaft. Bei bekannten Palettiervorrichtungen erfolgt dies dadurch, dass ein Schieber beim Schieben der Lage von der Schiebefläche zum Schiebetisch gegen ein festes Widerlager drückt, so dass sich dazwischen die ausgebildete Lage in einer Längsrichtung ausrichten kann. DE 32 10 189 A1 betrifft zum Beispiel eine Anordnung zum Übergeben einer aus mehreren Säcken bestehenden Sacklage von einer Lagensammelvorrichtung auf eine Ablegevorrichtung, die ihrerseits die Sacklage auf eine darunter befindliche Palette ablegt. DE 32 10 189 A1 offenbart ferner die Merkmale einer Schiebevorrichtung gemäß dem Oberbegriff des Anspruchs 1. Nachteilhaft bei den bekannten Lösungen ist es, dass auf diese Weise eine ungleichmäßige Krafteinteilung vorliegt. Insbesondere beruht dies auf der Tatsache, dass die ausgebildeten Lagen inhomogenen Schwankungen unterworfen sind, so dass die Abstände zwischen den einzelnen Säcken in einer Lage variieren können. Durch das einheitliche Aufbringen der Ausrichtkraft von einer einzigen Seite führt dies zu der Gefahr eines Quetschens, eines Klemmens oder sogar eines Aufreißens einzelner Säcke. Nicht zuletzt kann dies zum Einklemmen von Randbereichen der gefüllten Säcke führen, wodurch ebenfalls in weiterer Weise die Gefahr eines Aufreißens oder Quetschens der Säcke besteht.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise das Ausrichten mit einer höheren Sicherheit für die gefüllten Säcke auszugestalten.

Voranstehende Aufgabe wird gelöst durch eine Schiebevorrichtung mit den Merkmalen des Anspruchs 1 sowie ein Verfahren mit den Merkmalen des Anspruchs 7. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Schiebevorrichtung beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Eine Schiebevorrichtung ist für eine Palettiervorrichtung zum Stapeln von gefüllten Säcken zu einem Sackstapel einsetzbar. Hierfür weist die Schiebevorrichtung eine Schiebefläche und einen neben der Schiebefläche angeordneten Schiebetisch auf. Weiter ist ein Schieber vorgesehen, um eine Lage der Säcke von der Schiebefläche auf den Schiebetisch zu schieben. Eine Schiebevorrichtung zeichnet sich dadurch aus, dass in Schieberichtung des Schiebers am Ende des Schiebetisches ein bewegbares Widerlager angeordnet ist, gegen welches der Schieber die Lage der Säcke zum Längsausrichten dieser Lage schieben kann. Dabei ist an den beiden diesem Ende benachbarten Seiten des Schiebetisches jeweils ein Ausrichtdrücker angeordnet für ein seitliches Ausrichten der Säcke. Darüber hinaus wird in einer Palettiervorrichtung eine Schiebevorrichtung zur Verfügung gestellt, welche eine Schiebefläche zum Ausbilden einer jeweiligen Lage aus zwei oder mehr Reihen von Säcken aufweist. Eine Zufuhrvorrichtung mit einem oder mehreren Zufuhrbändern kann die einzelnen Reihen der Säcke auf die Schiebefläche zuführen. Sobald die Lage der gefüllten Säcke fertiggestellt ist, kann der Schieber diese gefüllten Säcke auf den benachbarten Schiebetisch schieben. Von dort kann durch ein Öffnen der einzelnen Schiebetischelemente diese Lage herabfallen bzw. durch Schwerkraftförderung auf eine Hubvorrichtung, eine Palette bzw. den darauf bereits befindlichen, teilweise fertigen Sackstapel abgesetzt werden. Hierzu wird später noch nähere Erläuterung erfolgen. Darüber hinaus ist nun im Bereich des Schiebetisches ein bewegbares Widerlager angeordnet, so dass beim Schieben der fertigen Lage auf den Schiebetisch dieses Widerlager eine definierte und vor allem variierbare Gegenkraft für das Ausrichten in Längsrichtung aufbringen kann. Mit anderen Worten kann nun von zwei Seiten die Ausrichtkraft für das Längsausrichten dieser Lage eingebracht werden. Damit wird nicht nur von einer Seite ein Kraftpfad mit einer eingebrachten Kraft beaufschlagt, sondern vielmehr von zwei Seiten in definierter Weise die Lageausrichtung und damit auch das Einbringen der Ausrichtkräfte möglich. Ein entscheidender Vorteil ist hier eine deutlich homogenere Kraftverteilung, so dass auch bei inhomogen und nicht ausgerichteten bzw. fehlausgerichteten Lagen das Risiko eines Verklemmens, eines Quetschens oder sogar eines Reißens der einzelnen Säcke deutlich reduziert werden kann.

Neben der Längsausrichtung erfolgt durch eine Schiebevorrichtung auch ein seitliches Ausrichten der Lage der Säcke. Hierfür sind auf beiden Seiten entsprechende Ausrichtdrücker vorgesehen, die auch in seitlicher Richtung eine Ausrichtkraft einbringen können. Dabei kann das seitliche Ausrichten gleichzeitig mit dem Längsausrichten erfolgen. Jedoch ist auch ein zeitlich versetztes seitliches Ausrichten möglich, zum Beispiel wenn das bewegbare Widerlager und der Schieber bereits zurückgefahren sind. Dabei sind beide Ausrichtdrücker ebenfalls bewegbar ausgebildet, so dass auch hier eine beidseitige Einbringung der Ausrichtkräfte und damit einhergehend ein homogenisiertes Ausrichten möglich wird.

Durch das Ausrichten wird die Lage in der definierten Position stabilisiert und zusammengeführt. Mögliche Variationen hinsichtlich der Einzelpositionen der Säcke können auf diese Weise auf der Schiebefläche noch toleriert werden, da sie auf dem Schiebetisch durch den entsprechenden Ausrichtvorgang eliminiert werden. Damit wird es möglich, mit höherer Geschwindigkeit den gesamten Palettiervorgang durchzuführen, insbesondere das Ausbilden der Lage auf der Schiebefläche. Die Genauigkeit bei der Positionierung der einzelnen Säcke wird dementsprechend notwendigerweise reduziert, so dass mit höherer Geschwindigkeit in den Zufuhrbändern einer Zufuhrvorrichtung gearbeitet werden kann. Die Finalisierung und dementsprechend genaue Definition der Ausrichtung der einzelnen Säcke auf das Lagebild erfolgt durch das Ausrichten auf dem Schiebetisch, während parallel auf der Schiebefläche nach dem Zurückfahren des Schiebers schon wieder die nächste Lage ausgebildet werden kann. Dementsprechend wird neben einer Verbesserung der Homogenisierung des Einbringens der Ausrichtkräfte auch eine Beschleunigung des gesamten Palettiervorgangs durch eine erfindungsgemäße Schiebevorrichtung möglich.

Das Widerlager ist als Kernidee der vorliegenden Erfindung bewegbar. Hier kann eine eigene Antriebsvorrichtung vorgesehen sein, um diese Bewegung durchzuführen. Bevorzugt ist es, wenn eine gemeinsame Kontrollvorrichtung den Antrieb sowohl des bewegbaren Widerlagers, als auch des Schiebers steuert bzw. sogar regelt. Auch kann bei dieser Steuerung bzw. Regelung eine Überwachung der jeweiligen Ausrichtkräfte erfolgen, wie dies später noch erläutert wird, um eine weitere Reduktion des Risikos der Beschädigung der gefüllten Säcke erreichen zu können. Neben den bereits beschriebenen Vorteilen aus zeitlichen Gründen und auch aus Homogenisierungsgründen wird auch das Ausrichtergebnis durch eine erfindungsgemäße Schiebevorrichtung verbessert. So wird an insgesamt vier Seiten ein Ausrichten durchgeführt, so dass final von allen Seiten Ausrichtkräfte alle Säcke in die gewünschte finale Lageposition führen. Dies führt zu eindeutiger und definierter Lagepositionierung auf dem Schiebetisch, so dass am Schluss eine höhere mechanische Stabilität des Sackstapels erzielbar wird. Die einzelnen Bewegungen, also die Bewegung der Ausrichtdrücker, die Bewegung des Schiebers und die Bewegung des bewegbaren Widerlagers sind insbesondere in Form von Translationsbewegungen ausgebildet. Jedoch sind grundsätzlich auch gekrümmte bzw. kurvenförmige Verläufe der Bewegungsrichtungen denkbar. Insbesondere die seitlichen Ausrichtdrücker können auf einer Schwenkbahn verlaufen. Bevorzugt sind jedoch alle Bewegungsrichtungen als Translationsbewegungen ausgeführt. Bevorzugt ist es weiter, wenn ein Eingreifen in den Abstand zwischen Widerlager und Schieber durch die Ausrichtdrücker erfolgt. Das bedeutet, dass die Ausrichtdrücker sozusagen zwischen dem Schieber einerseits und dem bewegbaren Widerlager andererseits das seitliche Ausrichten übernehmen. Für eine Reduktion eines Spaltes wird im nachfolgenden Absatz eine bevorzugte Ausführungsform näher erläutert.

Es ist von Vorteil, dass die Ausrichtdrücker einer Schiebevorrichtung jeweils einen Teleskopabschnitt aufweisen, dessen Länge durch teleskopartiges Einschieben und Ausschieben variabel ausgebildet ist. Mit anderen Worten kann damit eine Korrelation zum bewegbaren Widerlager und dem Schieber ausgebildet werden. Durch die Bewegbarkeit des Schiebers und des Widerlagers wird automatisch während der Bewegung der Abstand zwischen dem Widerlager und dem Schieber sich verändern, insbesondere reduzieren. Da bei bekannten Lösungen von Palettiervorrichtungen bei Vorsehen von Ausrichtdrückern starre Ausrichtdrücker vorgesehen waren, führt dies zu einem Spalt zwischen dem Widerlager und dem jeweiligen Ausrichtdrücker bzw. zwischen dem Schieber und dem Ausrichtdrücker. Dieser Spalt reduziert sich während der Bewegung des Schiebers, so dass hier eine Einklemm- und Quetschgefahr auch an den seitlichen Enden der Lage bestand. Erfindungsgemäß wird dieser Spalt nun reduziert bzw. vollständig vermieden, da der Teleskopabschnitt eine Längenveränderung der Ausrichtdrücker ermöglicht. Dabei ist der Teleskopabschnitt ausgerichtet, seine maximale Länge dahingehend zur Verfügung zu stellen, dass er den gesamten Abstand zwischen dem bewegbaren Widerlager und dem Schieber in der jeweiligen Null-Position überbrückt. Findet nun die Bewegung des Widerlagers und des Schiebers nach innen hin statt, um die Ausrichtkraft aufzubringen, so reduziert sich der Abstand zwischen dem Widerlager und dem Schieber. Der Teleskopabschnitt kann zusammenfahren, so dass dieser reduzierten Länge des Abstandes mit einer reduzierten Länge des Ausrichtdrückers in derselben Richtung begegnet wird. Unter einem Teleskopabschnitt ist dabei insbesondere ein Abschnitt zu verstehen, welcher überlappende Flächen aufweist, die relativ zueinander verschiebbar sind.

Diese Relativverschiebung kann auch als Teleskopieren bezeichnet werden. Selbstverständlich können einzelne Abschnitte des Ausrichtdrückers, insbesondere der Teleskopabschnitt, auch mit dem Schieber bzw. mit dem bewegbaren Widerlager verbunden sein. Dabei ist diese Verbindung ausgerichtet eine seitliche Bewegung zuzulassen, um das seitliche Einbringen der Ausrichtkräfte weiter zu ermöglichen. Es ist weiterhin von Vorteil, dass bei einer erfindungsgemäßen Schiebevorrichtung die Ausrichtdrücker jeweils zumindest eine Federvorrichtung für die Teleskopabschnitte aufweisen, welche die Teleskopabschnitte mit einer Federkraft in Richtung der maximalen Länge beaufschlagen. Insbesondere nach der Beendigung eines erfindungsgemäßen Ausrichtens kann auf diese Weise ein automatisches Ausfahren der Teleskopabschnitte erfolgen. Die Federvorrichtung kann dabei ein oder mehrere Federn aufweisen, die diese Federkraft zur Verfügung stellen. Auch ist eine zentrale Federvorrichtung denkbar, welche für zwei oder mehr Teleskopabschnitte auf beiden Seiten des Ausrichtdrückers die entsprechende Rückstellkraft zur Verfügung stellt.

Vorteilhaft ist es ebenfalls, wenn bei einer Schiebevorrichtung die Ausrichtdrücker an den Teleskopabschnitten jeweils einen Befestigungsabschnitt für eine seitlich verschiebbare Befestigung an dem Widerlager aufweisen. Die Befestigung erlaubt es, in beiden Richtungen den Spalt so gering wie möglich zu gestalten zwischen dem Ausrichtdrücker und dem entsprechenden Widerlager bzw. dem Schieber. Die seitlich verschiebbare Befestigung ist dahingehend zu verstehen, dass eine seitliche Translationsbewegung trotz dieser Befestigung für die Ausrichtdrücker weiter möglich ist. Die Befestigung ist dabei vorzugsweise in zwei Richtungen gegeben, so dass der Teleskopabschnitt durch die Translationsbewegung des bewegbaren Widerlagers teleskopierend aus- oder eingefahren werden kann. Bei einer derartigen Ausführungsform ist es möglich, auf die im voranstehenden Absatz beschriebene Federvorrichtung gänzlich zu verzichten. Die Befestigung kann dabei reversibel ausgebildet sein, zum Beispiel durch ein Einhaken von oben. Die seitliche Verschiebbarkeit ist auch entscheidend und insbesondere für reduzierte Reibverhältnisse ausgelegt, so dass ein einfaches Aneinanderabgleiten dieser seitlich verschiebbaren Befestigungsvorrichtung für die einzelnen Bauteile möglich ist.

Ebenfalls von Vorteil kann es sein, wenn bei einer erfindungsgemäßen Schiebevorrichtung die Ausrichtdrücker, insbesondere an den Teleskopabschnitten, Kontaktflächen für eine flächige Kontaktierung des Widerlagers und/oder des Schiebers aufweisen. Dafür sind die Ausrichtdrücker ausgelegt, einen Spalt noch weiter zu reduzieren oder sogar vollständig zu vermeiden. Die flächige Kontaktierung ist also ebenfalls eine Gleitkontaktierung, so dass die Ausrichtdrücker über die Kontaktflächen an entsprechenden Gegenkontaktflächen des Widerlagers und/oder des Schiebers entlanggleiten können. Damit wird die Wahrscheinlichkeit des Einklemmens und des Aufreißens für die einzelnen Säcke der Lage noch weiter reduziert.

Ein weiterer Vorteil ist erzielbar, wenn bei einer erfindungsgemäßen Schiebevorrichtung der Schieber und/oder das Widerlager Führungen für die Führung der Bewegung der Ausrichtdrücker aufweisen. Solche Führungen sind insbesondere Linearführungen. Sie dienen dazu, ein unerwünschtes Anheben der Ausrichtdrücker mit hoher Wahrscheinlichkeit zu vermeiden. Dies erlaubt es, noch zielgenauer und vor allem homogener die Ausrichtkräfte auch für das seitliche Ausrichten einzubringen. Damit wird darüber hinaus die seitliche Bewegbarkeit in relativem Bezug zwischen dem Widerlager und den Ausrichtdrückern bzw. zwischen dem Schieber und den Ausrichtdrückern möglich. Die Führungen sind dabei vorzugsweise reversibel ausgebildet, so dass beim Zurückbewegen des Schiebers sich der Führungskontakt zum Ausrichtdrücker wieder lösen kann. Mögliche Ausführungsformen für die Führungen sind zum Beispiel Führungsschienen oder Führungsnuten, die mit entsprechenden Führungsstiften des konträren Bauteils zusammenwirken.

Ebenfalls von Vorteil kann es sein, wenn bei einer erfindungsgemäßen Schiebevorrichtung die Ausrichtdrücker und/oder das Widerlager und/oder der Schieber für eine Translationsbewegung entlang einer Geraden ausgebildet sind. Das bedeutet, dass die notwendigen Antriebsvorrichtungen, wie auch die entsprechenden Lagerungen für die Translationsbewegungen deutlich kostengünstiger und einfacher ausgestaltet werden können. Auch Peripheriegeräte, welche die entsprechenden Translationslager zur Verfügung stellen, sind einfach und mit geringerer Komplexität möglich. Der Antriebsaufwand wird ebenfalls reduziert, da für die Antriebsvorrichtungen nur noch einfache und vorzugsweise sogar keine Getriebe mehr notwendig sind.

Ein weiterer Vorteil kann es sein, wenn bei einer erfindungsgemäßen Schiebevorrichtung eine Sensorvorrichtung vorgesehen ist für ein Überwachen der Ausrichtkraft beim Längsausrichten und/oder beim seitlichen Ausrichten und insbesondere für eine kraftgesteuerte Regelung der Ausrichtkräfte. Durch diese Rückkopplung wird es möglich, nicht mehr nur eine weggesteuerte, sondern sogar eine kraftgesteuerte Regelung der Ausrichtkräfte zur Verfügung zu stellen. Wie bereits erläutert worden ist, besteht grundsätzlich die Wahrscheinlichkeit einer inhomogenen Ausrichtung der einzelnen gefüllten Säcke in der jeweiligen Lage. Um hier sicherzustellen, dass keine unnötig hohen Einzelkräfte in lokaler Weise innerhalb der Lage beim Ausrichten entstehen, kann der jeweils kritische Kraftpfad durch die Überwachung der Kräfte mit hoher Wahrscheinlichkeit erkannt werden. Damit wird sichergestellt, dass durch die Vorgabe eines oberen Grenzwerts der jeweiligen Ausrichtkraft trotz eines geringeren Ausrichtweges dieser Grenzwert nicht überschritten wird. Das entsprechende zugehörige Risiko des Aufreißens oder Verletzens einzelner Säcke wird auf diese Weise ebenfalls reduziert. Insbesondere kann die entsprechende Obergrenze variiert werden in Abhängigkeit der unterschiedlichen Säcke bzw. unterschiedlicher Füllgüter.

Ebenfalls Gegenstand der vorliegenden Erfindung ist ein Verfahren für eine Ausrichtung einer Lage gefüllter Säcke in einer Palettiervorrichtung für das Stapeln der gefüllten Säcke zu einem Sackstapel, insbesondere mit einer erfindungsgemäßen Schiebevorrichtung, aufweisend die folgenden Schritte:
- Schieben einer Lage gefüllter Säcke von einer Schiebefläche auf einen Schiebetisch mit einem Schieber,
- Einbringen einer Ausrichtkraft zum Längsausrichten der Lage mittels eines bewegbaren Widerlagers gegen den Schieber,
- Einbringen einer Ausrichtkraft für ein seitliches Ausrichten der Lage mittels an zum Widerlager benachbarten Seiten angeordneten bewegbaren Aurichtdrückern,
wobei die Ausrichtdrücker jeweils einen Teleskopabschnitt aufweisen, dessen Länge durch teleskopartiges Einschieben und Ausschieben variabel ausgebildet ist, wobei die Ausrichtdrücker jeweils zumindest eine Federvorrichtung für die Teleskopabschnitte aufweisen, welche die Teleskopabschnitte mit einer Federkraft in Richtung der maximalen Länge der Federvorrichtung beaufschlagen. Durch die Verwendung einer erfindungsgemäßen Schiebevorrichtung bringt ein erfindungsgemäßes Verfahren die gleichen Vorteile mit sich, wie sie ausführlich mit Bezug auf eine erfindungsgemäße Schiebevorrichtung erläutert worden sind. Dabei können für das Einbringen der Ausrichtkraft sowohl der Schieber als auch das Widerlager gleichzeitig oder zumindest abschnittsweise auch zeitlich parallel zueinander bewegt werden. Bevorzugt ist es, wenn die Schritte des Längsausrichtens und des seitlichen Ausrichtens zumindest abschnittsweise zeitlich parallel durchgeführt werden. Der größte Zeitvorteil ist erzielbar, wenn das Längsausrichten und das seitliche Ausrichten zeitlich miteinander komplett parallel durchgeführt werden.

Ein erfindungsgemäßes Verfahren kann dahingehend weitergebildet werden, dass vor dem Öffnen des Schiebetisches und nach dem Einbringen der Ausrichtkräfte der Schieber und/oder das Widerlager und/oder die Ausrichtdrücker eine definierte Wegstrecke zurückfahren und die Lage für ein Ablassen beim Stapeln freigeben. Mit anderen Worten wird der Kontakt zwischen dem jeweils beweglichen Bauteil und der Lage der Säcke gelöst, so dass beim Ablassen beim Öffnen des Schiebetisches für diese Lage ein Hängenbleiben mit höherer Wahrscheinlichkeit vermieden werden kann. Dies sichert auch während der Ablassbewegung der fertig ausgerichteten Lage die Beibehaltung der definierten Position. Der definierte Weg ist dabei vorzugsweise kleiner als der volle Weg zur Freigabe, um ein unerwünschtes Aufheben der Ausrichtung mit höherer Wahrscheinlichkeit zu vermeiden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Ausführungsform eines Sackstapels während des Aufstapeins,
- Fig. 2: eine Ausführungsform einer Palettiervorrichtung mit einer erfindungsgemäßen Schiebevorrichtung in Draufsicht,
- Fig. 3: die Ausführungsform der Fig. 2 in einem weiteren Verfahrensschritt,
- Fig. 4: eine Schiebevorrichtung während des Ausrichtens in einem ersten Schritt,
- Fig. 5: die Ausführungsform der Fig. 4 in einem weiteren Schritt,
- Fig. 6: die Ausführungsform der Fig. 4 und 5 in einem weiteren Schritt,
- Fig. 7: eine Ausführungsmöglichkeit eines Teleskopabschnitts in eingefahrener Position, und
- Fig. 8: die Ausführungsform des Teleskopabschnitts der Fig. 7 in ausgefahrener Position.

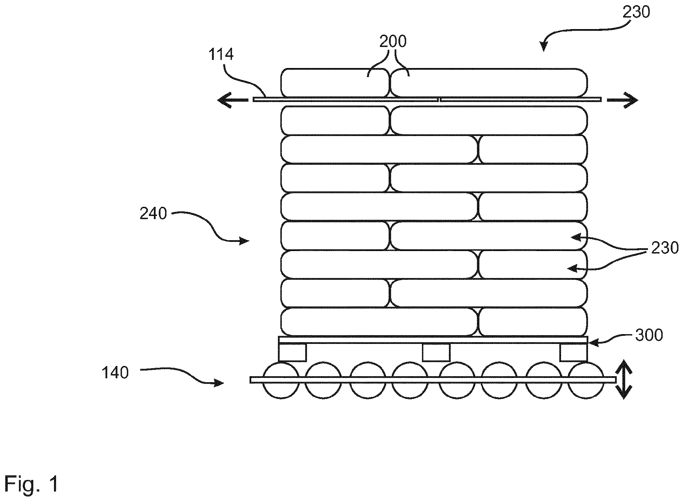

In Fig. 1 ist schematisch dargestellt, wie ein Sackstapel 240 aus einzelnen Lagen 230 der gefüllten Säcke 200 aufgebaut wird. Die Lage 230 wird durch die gefüllten Säcke auf dem Schiebetisch 114 ausgebildet. Anschließend kann sich der Schiebetisch 114 öffnen, so dass schwerkraftgefördert die Lage 230 auf die bereits gestapelte Lage 230 darunter abgesenkt werden kann. Anschließend kann eine Hubvorrichtung 140 zusammen mit einer Palette 300 und dem darauf aufgestapelten Sackstapel 240 eine definierte Wegstrecke nach unten fahren, so dass sich der Schiebetisch 114 wieder schließen kann.

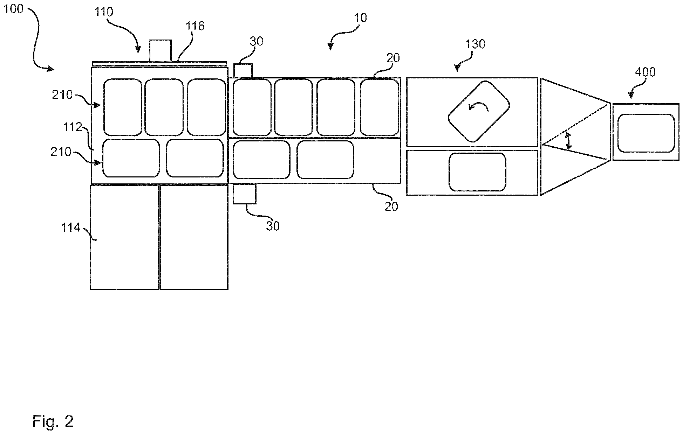

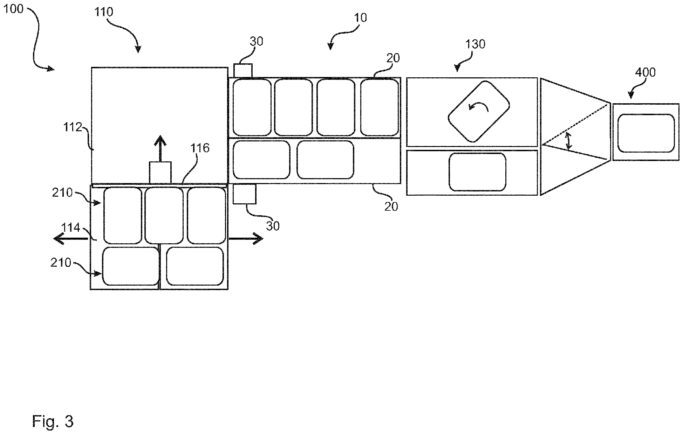

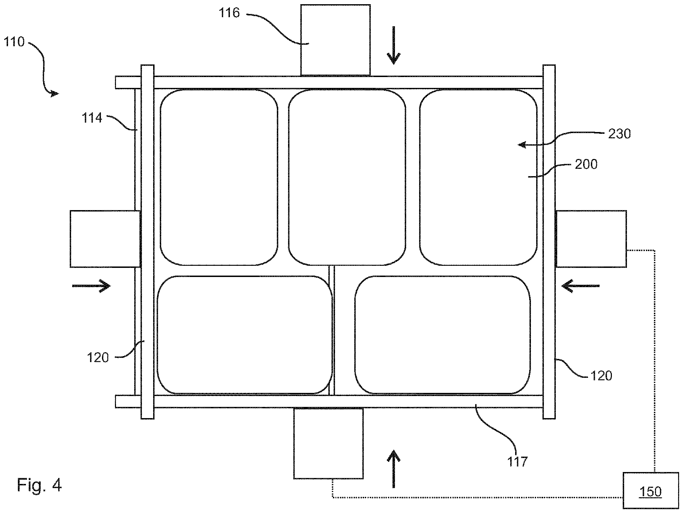

In den Fig. 2 und 3 wird dargestellt, wie eine gesamte Palettiervorrichtung 100 ausgebildet sein kann. Ausgehend von einer Herstellvorrichtung 400, welche zum Beispiel als sogenannte Form-Fill-and-Seal-Maschine gefüllte Säcke 200 herstellen kann, werden die Säcke 200 einer Drehvorrichtung 130 zugeführt. Dort kann die Rotationsausrichtung der einzelnen Säcke 200 geändert werden, um eine entsprechende Variation für unterschiedliche Lagebilder zu erzielen. Die Zufuhrvorrichtung 10 dieser Ausführungsform ist hier mit zwei separaten und unterschiedlich breiten Zufuhrbändern 20 ausgebildet, welche jeweils eine eigene Antriebsvorrichtung 30 aufweisen. Die Zufuhr der einzelnen gefüllten Säcke 200 erfolgt in Reihen 210, um die entsprechende Lage 230 auf der Schiebefläche 112 der Schiebevorrichtung 110 auszubilden. Hier ist gut zu erkennen, dass noch unregelmäßige Abstände zwischen den einzelnen gefüllten Säcken 200 bestehen. Anschließend kann ein Schieber 116 diese erste Lagepositionierung der Lage 230 auf den Schiebetisch 114 führen bzw. schieben, wie dies die Fig. 3 zeigt. Auf dem Schiebetisch 114 erfolgt nun das Ausrichten, wie es nachfolgend mit Bezug auf die Fig. 4 bis 6 erfindungsgemäß näher erläutert wird.

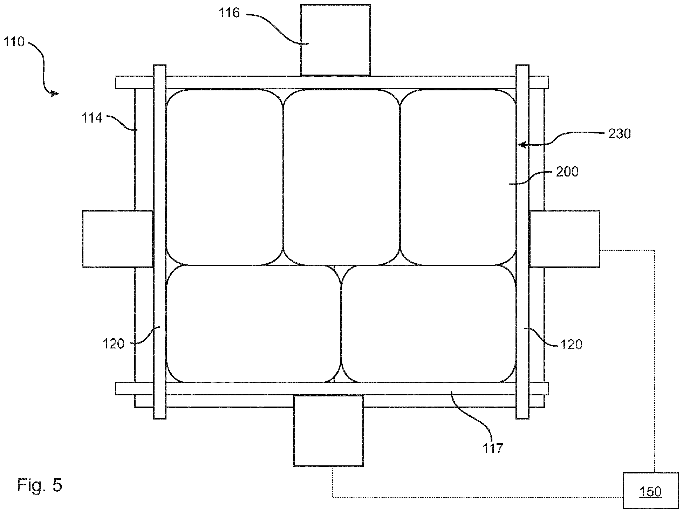

In Fig. 4 befindet sich nun die Lage 230 der gefüllten Säcke 200 auf dem Schiebetisch 114 der Schiebevorrichtung 110. Für ein Längsausrichten kann nun eine Weiterbewegung des Schiebers 116 gegen ein ebenfalls bewegbares Widerlager 117 erfolgen. Das Ergebnis dieser Längsausrichtung ist in Fig. 5 gezeigt. So sind in Längsrichtung, also zwischen dem Schieber 116 und dem bewegbaren Widerlager 117, die Abstände zwischen den einzelnen Säcken reduziert worden bzw. nun nicht mehr vorhanden.

Gleichzeitig erfolgt ein seitliches Ausrichten durch entsprechende Ausrichtdrücker 120 von den Seiten links und rechts. Dies erfolgt parallel zum Längsausrichten, so dass gleichzeitig die Abstände zwischen den einzelnen Säcken 200 in dieser seitlichen Ausrichtung ebenfalls reduziert bzw. vermieden werden können.

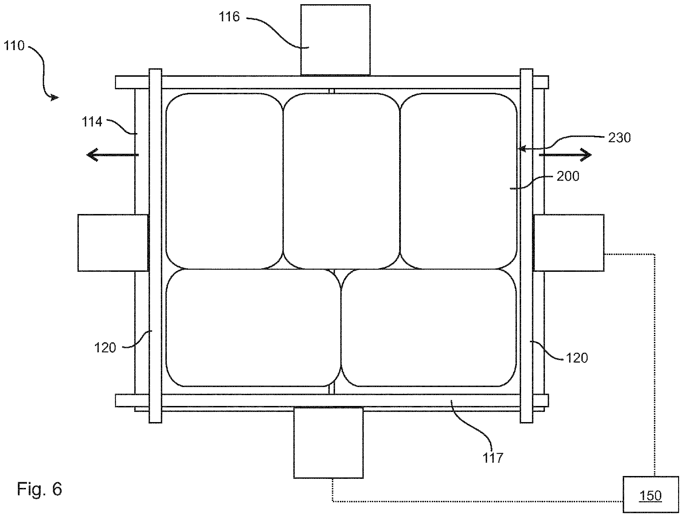

Nachdem abschließend nun das Ausrichten der Lage 230 der Säcke 200 vollständig erfolgt ist, können nun der Schieber 116, das Widerlager 117 und die Ausrichtdrücker 120 eine definierte Wegstrecke auffahren, wie dies in Fig. 6 gezeigt ist. Dies löst die Kontaktierung zu den einzelnen Säcken 200, so dass nachfolgend das Absenken der Lage 230 erfolgen kann, wie es mit Bezug auf Fig. 1 bereits erläutert worden ist.

Der gesamte voranstehend beschriebene Vorgang wird durch eine Sensorvorrichtung 150 überwacht, welche vorzugsweise eine Überwachung bzw. eine Bestimmung der einzelnen Ausrichtkräfte der Ausrichtdrücker 120, des Schiebers 116 und/oder des bewegbaren Widerlagers 117 durchführen kann. In der Sensorvorrichtung 150 können auch die einzelnen Antriebe für das Ausrichten geregelt bzw. gesteuert werden.

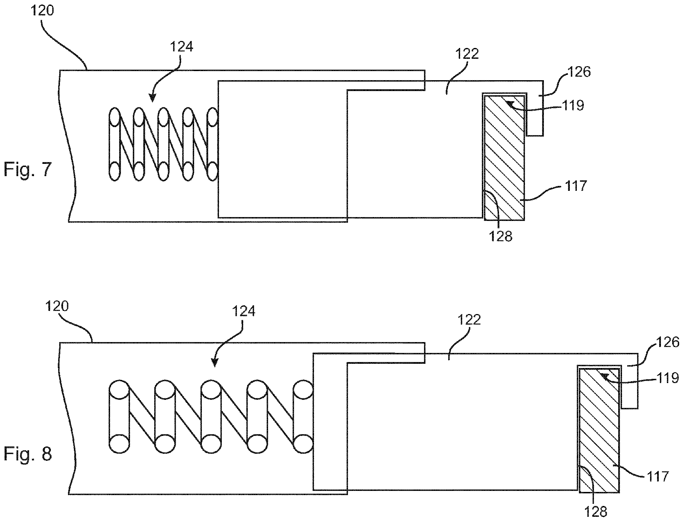

Wie aus den Fig. 4 bis 6 deutlich wird, verändert sich der Abstand zwischen dem Schieber 116 und dem bewegbaren Widerlager 117 während der Längsausrichtung. Um gleichzeitig von der Seite mit den Ausrichtdrückern 120 das seitliche Ausrichten gewährleisten zu können, ist ein Teleskopabschnitt 122 für die beiden Seiten des jeweiligen Ausrichtdrückers 120 vorgesehen, wie er in den Fig. 7 und 8 dargestellt ist. Zu Beginn des Ausrichtvorganges befindet sich der Teleskopabschnitt 122 in der ausgefahrenen Position, in welche er durch eine entsprechende Federvorrichtung 124 gedrückt wird. Um den Kontakt zum bewegbaren Widerlager 117 mit hoher Wahrscheinlichkeit kontaktierend über eine Kontaktfläche 128 aufrechtzuerhalten, ist darüber hinaus eine Führung 119 im entsprechenden Befestigungsabschnitt 126 versehen. Während des Längsausrichtens bewegt sich nun der bewegbare Schieber 117 in den Fig. 7 und 8 von rechts nach links, so dass dementsprechend der Teleskopabschnitt 122 gegen die Federvorrichtung 124 einfährt. Nach Beenden des Ausrichtvorgangs kann dieser Vorgang des Teleskopierens wieder rückgängig gemacht werden, so dass nun der nächste Ausrichtvorgang wieder stattfinden kann.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Zufuhrvorrichtung
- 20: Zufuhrband
- 30: Antriebsvorrichtung

- 100: Palettiervorrichtung
- 110: Schiebevorrichtung
- 112: Schiebefläche
- 114: Schiebetisch
- 116: Schieber
- 117: Widerlager
- 119: Führung
- 120: Ausrichtdrücker
- 122: Teleskopabschnitt
- 124: Federvorrichtung
- 126: Befestigungsabschnitt
- 128: Kontaktfläche
- 130: Drehvorrichtung
- 140: Hubvorrichtung
- 150: Sensorvorrichtung

- 200: Sack
- 210: Reihe
- 230: Lage
- 240: Sackstapel

- 300: Palette
- 400: Herstellvorrichtung

- SR: Schieberichtung

## Patentansprüche

1. Schiebevorrichtung (110) für eine Palettiervorrichtung (100) zum Stapeln von gefüllten Säcken (200) zu einem Sackstapel (240), aufweisend eine Schiebfläche (112) und einen neben der Schiebefläche (112) angeordneten Schiebetisch (114) sowie einen Schieber (116), um eine Lage (230) Säcke (200) von der Schiebefläche (112) auf den Schiebetisch (114) zu schieben,
wobei in Schieberichtung (SR) des Schiebers (116) am Ende des Schiebetisches (114) ein bewegbares Widerlager (117) angeordnet ist gegen welches der Schieber (116) die Lage (230) der Säcke (200) zum Längsausrichten dieser Lage (230) schieben kann, wobei an den beiden diesem Ende benachbarten Seiten des Schiebetisches (114) jeweils ein Ausrichtdrücker (120) angeordnet ist für ein seitliches Ausrichten der Lage (230) der Säcke (200), wobei die Ausrichtdrücker (120) jeweils einen Teleskopabschnitt (122) aufweisen, dessen Länge durch teleskopartiges Einschieben und Ausschieben variabel ausgebildet ist, **dadurch gekennzeichnet, dass** die Ausrichtdrücker (120) jeweils zumindest eine Federvorrichtung (124) für die Teleskopabschnitte (122) aufweisen, welche die Teleskopabschnitte (122) mit einer Federkraft in Richtung der maximalen Länge der Federvorrichtung (124) beaufschlagen.

2. Schiebevorrichtung (110) nach Anspruch 1,
**dadurch gekennzeichnet, dass**
die Ausrichtdrücker (120) an den Teleskopabschnitten (122) jeweils einen Befestigungsabschnitt (126) für eine seitlich verschiebbare Befestigung an dem Widerlager (117) aufweisen.

3. Schiebevorrichtung (110) nach einem der vorangegangenen Ansprüche,
**dadurch gekennzeichnet, dass**
die Ausrichtdrücker (120), insbesondere an den Teleskopabschnitten (122), Kontaktflächen (128) für eine flächige Kontaktierung des Widerlagers (117) und/oder des Schiebers (116) aufweisen.

4. Schiebevorrichtung (110) nach einem der vorangegangenen Ansprüche,
**dadurch gekennzeichnet, dass**
der Schieber (116) und/oder das Widerlager (117) Führungen (119) für die Führung der Bewegung der Ausrichtdrücker (120) aufweisen.

5. Schiebevorrichtung (110) nach einem der vorangegangenen Ansprüche,
**dadurch gekennzeichnet, dass**
die Ausrichtdrücker (120) und/oder das Widerlager (117) und/oder der Schieber (116) für eine Translationsbewegung entlang einer Gerade ausgebildet sind.

6. Schiebevorrichtung (110) nach einem der vorangegangenen Ansprüche,
**dadurch gekennzeichnet, dass**
eine Sensorvorrichtung (150) vorgesehen ist für ein Überwachen der Ausrichtkraft beim Längsausrichten und/oder beim seitlichen Ausrichten und insbesondere für eine kraftgesteuerte Regelung der Ausrichtkräfte.

7. Verfahren für ein Ausrichtung einer Lage (230) gefüllter Säcke (200) in einer Palettiervorrichtung (100) für das Stapeln der gefüllten Säcke (200) zu einem Sackstapel (240), mit einer Schiebevorrichtung (110) mit den Merkmalen eines der Ansprüche 1 bis 6, aufweisend die folgenden Schritte:
- Schieben einer Lage (230) gefüllter Säcke (200) von einer Schiebefläche (112) auf einen Schiebetisch (114) mit einem Schieber (116),
- Einbringen einer Ausrichtkraft zum Längsausrichten der Lage (230) mittels eines bewegbaren Widerlagers (117) gegen den Schieber (116),
- Einbringen einer Ausrichtkraft für ein seitliches Ausrichten der Lage (230) mittels an zum Widerlager (117) benachbarten Seiten angeordneten bewegbaren Ausrichtdrückern.

8. Verfahren nach Anspruch 7,
**dadurch gekennzeichnet, dass**
vor dem Öffnen des Schiebetisches (114) und nach dem Einbringen der Ausrichtkräfte der Schieber (116) und/oder das Widerlager (117) und/oder die Ausrichtdrücker (120) eine definierte Wegstrecke zurückfahren und die Lage (230) für ein Ablassen beim Stapeln freigeben.

## Claims

1. A sliding device (110) for a palletizing device (100) for the stacking of filled sacks (200) into a stack of sacks (240), having a sliding surface (112) and a sliding table (114) arranged next to the sliding surface (112) as well as a slider (116) in order to slide a layer (230) of sacks (200) from the sliding surface (112) onto the sliding table (114), wherein in the sliding direction (SR) of the slider (116) at the end of the sliding table (114) a movable abutment (117) is arranged, against which the slider (116) can slide the layer (230) of sacks (200) for the longitudinal alignment of this layer, wherein on the two sides of the sliding table (114) adjacent to this end in each case an alignment pusher (120) is arranged for a lateral alignment of the layer (230) of the sacks (200), wherein the alignment pushers (120) in each case have a telescoping section (122), the length of which is formed variably by telescopic sliding in and sliding out, **characterized in that** the alignment pushers (120 in each case have at least one spring device (124) for the telescoping section (122), which applies a spring force to the telescoping section (122) in the direction of the maximum length of the spring device (124).

2. A sliding device (110) according to Claim 1,
**characterized in that**
the alignment pushers (120) have on the telescoping sections (122) in each case a fastening section (126) for a laterally slidable fastening to the abutment (117).

3. A sliding device (110) according to any one of the preceding claims,
**characterized in that**
the alignment pushers (120), in particular on the telescoping sections (122), have contact surfaces (128) for a flat contact with the abutment (117) and/or the slider (116).

4. A sliding device (110), according to any one of the preceding claims,
**characterized in that**
the slider (116) and/or the abutment (117) have guides (119) for guiding the movement of the alignment pusher (120).

5. A sliding device (110) according to any one of the preceding claims,
**characterized in that**
the alignment pusher (120) and/or the abutment (117) and/or the slider (116) are designed for a translational movement along a straight line.

6. A sliding device (110) according to any one of the preceding claims,
**characterized in that**
a sensor device (150) is provided for a monitoring of the alignment force for the longitudinal alignment and/or for the lateral alignment and in particular for a force-controlled regulation of the alignment forces.

7. A method for an alignment of a layer (230) of filled sacks (200) in a palletizing device (100) for the stacking of the filled sacks (200) into a stack of sacks (240), with a sliding device (110) with the features of one of Claims 1 to 6, having the following steps:
- Sliding of a layer (230) of filled sacks (200) from a sliding surface (112) onto a sliding table (114) with a slider (116),
- introduction of an alignment force for the longitudinal alignment of the layer (230) by means of a movable abutment (117) against the slider (116),
- introduction of an alignment force for a lateral alignment of the layer (230) by means of movable alignment pushers arranged on sides adjacent to the abutment (117).

8. A method according to Claim 7,
**characterized in that**
before the opening of the sliding table (114) and after the introduction of the alignment forces the slider (116) and/or of the abutment (117) and/or the alignment pushers (120) retract a defined distance and free the layer (230) to be released for the stacking.

## Revendications

1. Dispositif de poussée (110) pour un dispositif de palettisation (100) pour l'empilement de sacs remplis (200) en une pile sacs (240), comprenant une surface de poussée (112) et une table de poussée (114) disposées à proximité de la surface de poussée (112), ainsi qu'un poussoir (116), afin de pousser une couche (230) de sacs (200) de la surface de poussée (112) vers la table de poussée (114),
moyennant quoi, dans la direction de poussée (SR) du poussoir (116), à l'extrémité de la table de poussée (114), se trouve un contre-palier mobile (117), contre lequel le poussoir (116) peut pousser la couche (230) de sacs (200) pour l'alignement longitudinal de cette couche (230), moyennant quoi, au niveau des côtés adjacents de cette extrémité de la table de poussée (114), se trouve un poussoir d'alignement (120) pour un alignement latéral de la couche (230) de sacs (200), les poussoirs d'alignement (120) comprenant chacun une portion télescopique (122) dont la longueur est conçue de manière variable par entrée et sortie télescopique, **caractérisé en ce que** les poussoirs d'alignement (120) comprennent chacun au moins un dispositif à ressort (124) pour les portions télescopiques (122) qui appliquent aux portions télescopiques (122) une force élastique en direction de la longueur maximale du dispositif à ressort (124).

2. Dispositif de poussée (110) selon la revendication 1,
**caractérisé en ce que**
les poussoirs d'alignement (120) comprennent chacun, au niveau des portions télescopiques (122) une portion de fixation (126) pour une fixation mobile latérale contre le contre-palier (117).

3. Dispositif de poussée (110) selon l'une des revendications précédentes,
**caractérisé en ce que**
les poussoirs d'alignement (120) comprennent, plus particulièrement au niveau des portions télescopiques (122), des surfaces de contact (128) pour un contact sur toute la surface du contre-palier (117) et/ou du poussoir (116).

4. Dispositif de poussée (110) selon l'une des revendications précédentes,
**caractérisé en ce que**
le poussoir (116) et/ou le contre-palier (117) comprennent des guidages (119) pour le guidage du mouvement des poussoirs d'alignement (120).

5. Dispositif de poussée (110) selon l'une des revendications précédentes,
**caractérisé en ce que**
les poussoirs d'alignement (120) et/ou le contre-palier (117) et/ou le poussoir (116) sont conçus pour un mouvement de transport le long d'une droite.

6. Dispositif de poussée (110) selon l'une des revendications précédentes,
**caractérisé en ce que**
un dispositif de capteur (150) est prévu pour une surveillance de la force d'alignement lors de l'alignement longitudinal et/ou lors de l'alignement latéral et plus particulièrement pour une régulation des forces d'alignement.

7. Procédé pour un alignement d'une couche (230) de sacs remplis (200) dans un dispositif de palettisation (100) pour l'empilement des sacs remplis (200) en une pile de sacs (240), avec un dispositif de poussée (110) avec les caractéristiques d'une des revendications 1 à 6, comprenant les étapes suivantes :
- poussée d'une couche (230) de sacs remplis (200) par une surface de poussée (112) vers une table de poussée (114) avec un poussoir (116),
- application d'une force d'alignement pour l'alignement longitudinal de la couche (230) au moyen d'un contre-palier mobile (117) contre le poussoir (116),
- application d'une force d'alignement pour un alignement latéral de la couche (230) au moyen de poussoirs d'alignement mobiles disposés sur des côtés adjacents au contre-palier (117).

8. Procédé selon la revendication 7,
**caractérisé en ce que**
avant l'ouverture de la table de poussée (114) et après l'application des forces d'alignement, le poussoir (116) et/ou le contre-palier (117) et/ou les poussoirs d'alignement (120) parcourent un trajet défini et libèrent la couche (230) pour un relâchement lors de l'empilement.
